(19) Europäisches Patentamt
European Patent Office
Office européen des brevets

(11) **EP 4 597 626 A1**

(12) **EUROPEAN PATENT APPLICATION**
published in accordance with Art. 153(4) EPC

(43) Date of publication:
06.08.2025 Bulletin 2025/32

(21) Application number: 23871381.2

(22) Date of filing: 12.07.2023

(51) International Patent Classification (IPC):
*H01M 4/58* (2010.01)  *C01B 25/45* (2006.01)
*H01M 4/136* (2010.01)  *H01M 4/36* (2006.01)
*H01M 4/66* (2006.01)

(52) Cooperative Patent Classification (CPC):
C01B 25/45; H01M 4/136; H01M 4/36; H01M 4/58;
H01M 4/66; Y02E 60/10

(86) International application number:
PCT/JP2023/025770

(87) International publication number:
WO 2024/070137 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 JP 2022158261

(71) Applicant: SUMITOMO METAL MINING CO., LTD.
Tokyo
105-8716 (JP)

(72) Inventors:
• YAMAYA, Ryuta
  Tokyo 105-8716 (JP)
• MIZUNUMA, Shouhei
  Tokyo 105-8716 (JP)
• OSHITARI, Satoru
  Ichikawa-shi, Chiba 272-8588 (JP)

(74) Representative: Jones, Nicholas Andrew
Withers & Rogers LLP
2 London Bridge
London SE1 9RA (GB)

(54) **LITHIUM-ION SECONDARY BATTERY POSITIVE ELECTRODE MATERIAL AND METHOD FOR MANUFACTURING SAME, LITHIUM-ION SECONDARY BATTERY POSITIVE ELECTRODE, AND LITHIUM-ION SECONDARY BATTERY**

(57) Provided is a positive electrode material for a lithium ion secondary battery, including aggregated particles including aggregated multiple primary particles of a positive electrode active substance containing lithium iron phosphate coated with a carbonaceous film, the positive electrode active substance having a prescribed composition containing lithium iron phosphate, the positive electrode material having a change rate of a lattice area of a b-c axis plane before charging and after full charging (((lattice area before charging-lattice area after full charging)/lattice area before charging) $\times$ 100) of 1.10% or more and 1.33% or less. The positive electrode material has excellent cycle characteristics and high input and output characteristics in using as a positive electrode of a lithium ion secondary battery.

[Fig. 1]

**Description**

Technical Field

The present invention relates to a positive electrode material for a lithium ion secondary battery and a method for producing the same, a positive electrode for a lithium ion secondary battery, and a lithium ion secondary battery.

Background Art

Lithium ion secondary batteries have a higher energy density and a higher output power density than lead batteries and nickel hydrogen batteries, and have been applied to various fields including small size electronic devices, such as smartphones, and household backup power supplies, and electric power tools. Large capacity lithium ion secondary batteries are becoming practical for use in electric vehicles and other vehicles and for storing renewable energy sources, such as solar power generation and wind power generation.

A lithium ion secondary battery has at least a positive electrode, a negative electrode, and an electrolyte. The electrode material constituting the positive electrode is a lithium metal complex oxide capable of reversibly intercalating and deintercalating lithium ions, such as lithium cobaltate ($LiCoO_2$) and lithium manganate ($LiMn_2O_4$), which are oxide based positive electrode materials, and lithium iron phosphate ($LiFeOP_4$), which is an olivine based positive electrode material, and improvements thereof are being investigated from various standpoints, such as increase of the capacity, extension of the life, enhancement of the safety, and reduction of the cost of batteries.

Lithium iron phosphate ($LiFeOP_4$) described above is a material capable of easily reducing the cost due to the use of iron, which is abundant and inexpensive. Lithium iron phosphate also has excellent characteristics that the oxide based positive electrode materials represented by lithium cobaltate cannot achieve, for example, the outstanding safety due to the strong covalent bond between phosphorus and oxygen, preventing oxygen release at a high temperature.

On the other hand, lithium iron phosphate is low in Li ion diffusibility and electron conductivity due to the olivine structure, resulting in a disadvantage of input and output characteristics that is inferior to the oxide based positive electrode material. This difference in characteristics becomes conspicuous in the case where the operating temperature of batteries is lowered, and therefore it has been considered that lithium iron phosphate having an olivine structure is not suitable for in-vehicle applications requiring high input and output characteristics particularly in a low temperature range, such as electric vehicles and hybrid vehicles.

For improving the input and output characteristics at a low temperature, various investigations have been made, for example, the miniaturization of primary particles of lithium iron phosphate, the optimization of a conductive carbonaceous film, and the covering with a Li ion conductor on the surface of the positive electrode active substance, which are however still short in overcoming the inherent defects of lithium iron phosphate.

For improving the cycle characteristics of lithium iron phosphate, it has been proposed to reduce cracks, breakages, and the like of the active substance particles due to the volume change of crystals.

For example, PTL 1 proposes an electrode material represented by the compositional formula $LiFe_{1-x}M_xPO_4$ (wherein M represents one or more kinds of an element selected from Mg, Ca, Sr, Ba, Sc, Y, Zn, Al, Ga, In, Si, and a rare earth element, $0 < x < 0.5$).

Citation List

Patent Literature

PTL 1: JP 2001-307726 A

Summary of Invention

Technical Problem

Lithium iron phosphate undergoes a large volume change of crystals due to the charge and discharge reaction, resulting in a problem in which structural defects, such as cracks and breakages, of the active substance particles occur to cause deterioration of the charge and discharge capacity and the cycle characteristics. On the other hand, PTL 1 states that a lithium secondary battery that has a large discharge capacity, excellent cycle characteristics, and a long lifetime can be provided.

PTL 1 states that the electrode material proposed thereby focuses on the phase transition rate in the two-phase coexistence reaction of $Li_{1-y}FePO_4$ and $FePO_4$, and uses an additive element for increasing the phase transition rate and reducing the volume change, thereby reducing the polarization in charging and discharging and achieving a large capacity and a small capacity drop in the charge and discharge cycle.

However, lithium iron phosphate also has a problem in input and output characteristics in addition to the cycle stability, and PTL 1 does not sufficiently investigate the problem.

In view of the problems in the ordinary techniques, an object of one aspect of the present invention is to provide a positive electrode material containing lithium iron phosphate that has excellent cycle characteristics and high input and output characteristics in using as a positive electrode of a lithium ion secondary battery, and a method for producing the same, and also a positive electrode for a lithium ion secondary battery and a lithium ion secondary battery.

Solution to Problem

<1> A positive electrode material for a lithium ion secondary battery, including aggregated particles including aggregated multiple primary particles of a positive electrode active substance coated with a carbonaceous film,

wherein the positive electrode active substance contains lithium iron phosphate, the lithium iron phosphate containing lithium (Li), iron (Fe), magnesium (Mg), and a metal element A (A) in a mass ratio of Li/Fe/Mg/A = x/y/z/1 - y - z, in which x satisfies $0.9 < x < 1.1$, y satisfies $0.2 < y < 1.0$, z satisfies $0 < z < 0.1$ and $0.2 < y + z \leq 1$, and the metal element A is at least one kind of an additive element selected from the group consisting of Zn, Co, Ni, Ti, and V, and

wherein the positive electrode material has a change rate of a lattice area of a b-c axis plane before charging and after full charging (((lattice area before charging - lattice area after full charging)/lattice area before charging) $\times$ 100) of 1.10% or more and 1.33% or less.

<2> The positive electrode material for a lithium ion secondary battery according to the item <1>, in which the positive electrode material has a change rate of a lattice volume before charging and after full charging (((lattice volume before charging - lattice volume after full charging)/volume before charging) $\times$ 100) of 4.90% or more and 6.06% or less.

<3> The positive electrode material for a lithium ion secondary battery according to the item <1> or <2>, in which the positive electrode material has a crystallite diameter of 80 nm or more and 150 nm or less, and a specific surface area of 6.0 $m^2/g$ or more and 14.0 $m^2/g$ or less.

<4> The positive electrode material for a lithium ion secondary battery according to the item <1> or <2>, in which the positive electrode material has a tap density of 1.1 $g/cm^3$ or more, an NMP absorption amount of 40 mL/100 g or less, and a powder compact density obtained by compacting the positive electrode material into a circular shape having a diameter of 20 mm under application of a pressure of 16 kN of 2.4 $g/cm^3$ or more.

<5> A method for producing the positive electrode material for a lithium ion secondary battery according to the item <1> or <2>, including

a crystallizing step of preforming a crystallization reaction with a metal source having a valence number of 2, 3, or both, and a phosphoric acid source, so as to provide crystallized particles,

a water rinsing step of water rinsing and drying the crystallized particles, so as to provide a precursor of the positive electrode active substance,

a mixing step of mixing the precursor of the positive electrode active substance, a lithium source, and a carbon source, so as to provide a raw material mixture, and

a baking step of baking the raw material mixture in a non-oxidizing atmosphere, so as to provide the positive electrode material containing the positive electrode active substance;

wherein the precursor of the positive electrode active substance has a mass ratio of P with respect to a total of Fe, Mg, and the metal element A (P/(Fe + Mg + A)) of 0.95 or more and 1.03 or less.

<6> The method for producing the positive electrode material for a lithium ion secondary battery according to the item <5>, in which the precursor of the positive electrode active substance has a specific surface area of 7.0 $m^2/g$ or more and 12.0 $m^2/g$ or less and a particle diameter (D50) at a cumulative percentage of 50% in a cumulative particle size distribution of 0.5 $\mu$m or more and 5.0 $\mu$m or less.

<7> A positive electrode for a lithium ion secondary battery, including an aluminum collector and a positive electrode mixture layer formed on the aluminum collector,

wherein the positive electrode mixture layer contains the positive electrode material for a lithium ion secondary battery according to claim 1 or 2.

<8> A lithium ion secondary battery including at least a positive electrode, a negative electrode, and an electrolyte, wherein the positive electrode is the positive electrode for a lithium ion secondary battery according to claim 7.

Advantageous Effects of Invention

One embodiment of the present invention can provide a positive electrode material containing lithium iron phosphate that has excellent cycle characteristics and high input and output characteristics in using as a positive electrode of a lithium ion secondary battery, and a method for producing the same, and also a positive electrode for a lithium ion secondary battery and a lithium ion secondary battery.

Brief Description of Drawing

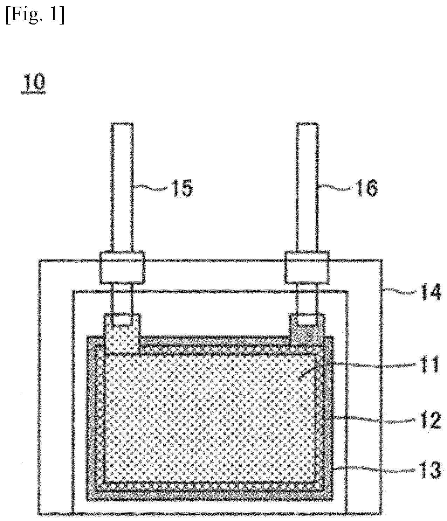

[Fig. 1] Fig. 1 is a schematic illustration showing a cross sectional structure of a laminate battery produced in Examples and Comparative Examples.

Description of Embodiments

Embodiments for practicing the present invention will be described below. However, the present invention is not limited to the embodiments shown below, and various modifications and substitutions can be made in the embodiments shown below without deviating from the scope of the present invention. In the description below, the expression "A to B" means "A or more and B or less".

[Positive Electrode Material for Lithium Ion Secondary Battery]

The positive electrode material for a lithium ion secondary battery of the present embodiment is a positive electrode material for a lithium ion secondary battery including aggregated particles including aggregated multiple primary particles of a positive electrode active substance coated with a carbonaceous film.

The positive electrode active substance contains lithium iron phosphate, and the lithium iron phosphate contains lithium (Li), iron (Fe), magnesium (Mg), and a metal element A (A) in a mass ratio of Li/Fe/Mg/A = $x/y/z/1 - y - z$, in which $x$ satisfies $0.9 < x < 1.1$, $y$ satisfies $0.2 < y < 1.0$, $z$ satisfies $0 < z < 0.1$ and $0.2 < y+z \leq 1$, and the metal element A is at least one kind of an additive element selected from the group consisting of Zn, Co, Ni, Ti, and V.

The positive electrode material has a change rate of a lattice area of a b-c axis plane before charging and after full charging $(((\text{lattice area before charging} - \text{lattice area after full charging})/\text{lattice area before charging}) \times 100)$ of 1.10% or more and 1.33% or less.

The change rate is calculated from the lattice constants $b$ and $c$ of the positive electrode material.

The positive electrode material for a lithium ion secondary battery of the present embodiment contains lithium iron phosphate as a positive electrode active substance, and has a structure that has the conductive carbonaceous film for improving the conductivity of the positive electrode material.

In the following description, the positive electrode material for a lithium ion secondary battery may be referred simply to as a "positive electrode material", and the lithium iron phosphate may be referred simply to as "LFP".

In the LFP, in a charge and discharge reaction, Li ions undergo intercalation and deintercalation at the two-layer interface of the Li-containing layer ($LiFePO_4$) and the Li-releasing layer ($FePO_4$). The two-layer interface means the b-c axis plane. In the description herein, the plane that is in parallel to the b axis and the c axis is referred to as a "b-c axis plane" or a "b-c plane". In the case where the difference in lattice area at the two-layer interface, i.e., the difference in the lattice area between the Li-containing layer and the Li-releasing layer, is increased, the intercalation and deintercalation reaction of Li ions is inhibited thereby, and the larger the difference in the lattice area is, the intercalation and deintercalation reaction of Li ions is more inhibited to deteriorate the charge and discharge characteristics.

The present inventors have found that the input and output characteristics of the lithium ion secondary battery is influenced by the difference in the lattice area occurring at the b-c plane at which Li ions are intercalated and deintercalated through the charge and discharge reaction, and the input and output characteristics can be enhanced by reducing the difference in the lattice area.

In the following description, the lithium ion secondary battery may be referred simply to as a "battery".

The charge and discharge reaction of the LFP is accompanied by a volume change of the crystals, and the volume change is influenced by the size of the crystals. Therefore, the increase of the size of the crystals increases the stress applied to the crystals in the form of particles due to the volume change, and structural defects, such as cracks and breakages, tend to occur in the crystals due to the charge and discharge reaction. Accordingly, the repetition of the charge and discharge reaction increases the crystals that cannot contribute to the charge and discharge reaction, resulting in the deterioration of the cycle characteristics.

On the other hand, the difference in the lattice area described above is the change of the crystal structure itself, which is not largely influenced by the size of the crystals, and influences the intercalation and deintercalation reaction of Li ions. Therefore, the input and output characteristics can be enhanced by controlling the difference in the lattice area.

Furthermore, the volume change of the crystals can also be reduced, and thereby the cycle characteristics can be enhanced.

In the positive electrode material of the present embodiment, the change rate of the lattice area of the b-c axis plane before charging and after full charging calculated from the lattice constants b and c of the positive electrode material, i.e., the mismatch factor of the b-c axis plane, is 1.10% or more and 1.33% or less. In the case where the mismatch factor is in the range, the inhibition of the intercalation and deintercalation reaction of Li ions can be reduced to enhance the input and output characteristics. In the case where the mismatch factor is less than 1.10%, the inactive element that does not contribute to the charge and discharge redox reaction is increased in the LFP, resulting in a possibility of deteriorating the charge and discharge capacity.

From this standpoint, the change rate of the lattice area of the b-c axis plane before charging and after full charging ((((lattice area before charging - lattice area after full charging)/lattice area before charging) $\times$ 100) of the positive electrode material is preferably 1.11% or more and 1.26% or less, more preferably 1.12% or more and 1.23% or less, and further preferably 1.13% or more and 1.22% or less.

The mismatch factor can be obtained from the lattice area s before charging and the lattice area s' after full charging according to the following expression (1). The lattice area can be obtained by the lattice constant calculated from the diffraction pattern measured with an X-ray diffraction apparatus.

$$\text{Mismatch factor } (\%) = ((s-s')/s) \times 100 \ ... \ (1)$$

For the mismatch factor, the change in size of the lattice in charging and discharging can be reduced by replacing Fe in the LFP by an element having a small difference in ionic radius between the divalent form and the trivalent form, an element having an intermediate ionic radius with respect to Fe, or the like. In particular, an inactive element that does not undergo valence change from the divalent form to the trivalent form, such as Mg, has a large effect of reducing the mismatch factor.

In the positive electrode material, in the case where the amount of Mg added is regulated to the range of z in the composition to $0 < z < 0.1$, the mismatch factor of the b-c plane can be reduced through the replacement from Fe. From the standpoint of reducing the mismatch factor for further enhancing the output characteristics, z preferably satisfies $0.01 \leq z < 0.1$, more preferably $0.03 \leq z < 0.1$, and further preferably $0.06 \leq z < 0.1$.

As for the additive element A in the positive electrode material, the range of $1 - y - z$ in the composition may be $0.2 < y + z \leq 1$, i.e., $0 \leq 1 - y - z < 0.8$. The additive element A may be added for the purpose of enhancing the battery characteristics, such as the output characteristics and the charge and discharge characteristics.

The positive electrode material may contain phosphoric acid ($PO_4$) in a mass ratio of $1 + \alpha$. Accordingly, it is preferred that the positive electrode material contains lithium (Li), iron (Fe), magnesium (Mg), the metal element A (A), and phosphoric acid ($PO_4$) in a mass ratio of $Li/Fe/Mg/A/PO_4 = x/y/z/1 - y - z/1 + \alpha$, in which x satisfies $0.9 < x < 1.1$, y satisfies $0.2 < y < 1.0$, and z satisfies $0 < z < 0.1$ and $0.2 < y + z \leq 1$. $\alpha$ preferably satisfies $-0.05 \leq \alpha \leq 0.03$, and more preferably $-0.01 \leq \alpha \leq 0.03$. The amount of phosphoric acid that is in the range can facilitate the dissolution of magnesium in the crystals of the olivine structure and the replacement from iron.

In the positive electrode material of the present embodiment, the change rate of the lattice volume of the positive electrode material before charging and after full charging may be 4.90% or more and 6.06% or less. In the case where the change rate of the lattice volume is in the range, the volume change of the crystals can be suppressed, and cracks, breakage, and the like of the crystals can be reduced to enhance the cycle characteristics.

From this standpoint, the change rate of the lattice volume of the positive electrode material before charging and after full charging ((((lattice volume before charging-lattice volume after full charging)/volume before charging) $\times$ 100) is preferably 4.95% or more and 6.00% or less, more preferably 5.00% or more and 5.60% or less, and further preferably 5.00% or more and 5.30% or less.

The change rate of the lattice volume before charging and after full charging can be obtained from the lattice volume v before charging and the lattice area v' after full charging according to the following expression (2). The lattice volume can be obtained by the lattice constant calculated from the diffraction pattern measured with an X-ray diffraction apparatus.

$$\text{Change rate of lattice volume } (\%) = ((v-v')/v) \times 100 \ ... \ (2)$$

The positive electrode material of the present embodiment may have a crystallite diameter of 80 nm or more and 150 nm or less. In the case where the crystallite diameter is in the range, the crystallinity can be enhanced to provide the sufficient battery characteristics, such as the charge and discharge characteristics and the cycle characteristics. The crystallite diameter can be obtained from the peak in the X-ray diffraction pattern with the Scherrer equation. From this standpoint, the crystallite diameter is more preferably 110 nm or more and 134 nm or less, and further preferably 110 nm or more and 133 nm or less.

The positive electrode material may have a specific surface area of $6.0 m^2/g$ or more and $14.0 m^2/g$ or less. In this case, the electrolyte and the positive electrode material can be sufficiently brought into contact with each other to have high charge and discharge characteristics, and the formation of fine particles can be suppressed to enhance the packing density inside the battery.

From this standpoint, the specific surface area of the positive electrode material is preferably $6.8 m^2/g$ or more and $13.5 m^2/g$ or less, more preferably $8.0 m^2/g$ or more and $13.0 m^2/g$ or less, and further preferably $8.7 m^2/g$ or more and $12.5 m^2/g$ or less.

The positive electrode material may have a tap density of $1.1 g/cm^3$ or more. The tap density is an index of the packing density inside the battery, and the value of $1.1 g/cm^3$ or more therefor can sufficiently enhance the charge and discharge capacity per unit volume. The upper limit of the tap density is not particularly limited, and for example, may be $3.0 g/cm^3$ or less.

The positive electrode material may have an NMP (N-methyl-2-pyrrolidone) absorption amount of 40 mL/100 g or less. The NMP absorption amount is an index of the void volume in the positive electrode material, and the NMP absorption amount of 40 mL/100 g or less can restrict the void volume to enhance the packing density inside the battery. The lower limit of the NMP absorption amount is not particularly limited, and from the standpoint of improving the contact with the electrolyte, may be 20 mL/100 g or more.

From this standpoint, the NMP absorption amount is preferably 28 mL/100 g or more and 40 mL/100 g or less, more preferably 30 mL/100 g or more and 39 mL/100 g or less, and further preferably 32 mL/100 g or more and 38 mL/100 g or less.

The NMP absorption amount can be measured according to JIS K6217-4:2017 provided that NMP is used instead of dibutyl phthalate (DBP).

The positive electrode material may have a powder compact density obtained by compacting under application of a pressure of 16 kN of $2.4 g/cm^3$ or more. In this case, a positive electrode having a high density can be formed, and the charge and discharge capacity per unit volume of the battery can be sufficiently enhanced. The powder compact density may be $3.0 g/cm^3$ or less while not particularly limited. The powder compact density is preferably $2.5 g/cm^3$ or more.

The measurement method of the powder compact density is not particularly limited, and may be, for example, such a manner that a prescribed amount of a specimen is placed in a mold having an inner diameter of 20 mm, and applied with a load of 16 kN, the volume of the specimen is calculated from the height of the specimen under application of the load, and the mass of the specimen is divided by the volume thereof to provide the powder compact density.

[Method for producing Positive Electrode Material for Lithium Ion Secondary Battery]

The method for producing a positive electrode material for a lithium ion secondary battery of the present embodiment is a method for producing the positive electrode material for a lithium ion secondary battery of the present embodiment described above, and includes a crystallizing step, a water rinsing step, a mixing step, and a baking step. In the following description, the method for producing a positive electrode material for a lithium ion secondary battery of the present embodiment may be referred simply to as a "present production method".

The steps of the present production method will be described below, in which the descriptions for the items having been described may be omitted in some cases.

(Crystallizing Step)

In the crystallizing step, a crystallization reaction is performed with a metal source having a valence number of 2, 3, or both, and a phosphoric acid source, providing crystallized particles.

The crystallized particles obtained are generally a complex metal phosphate compound. In the crystallizing step, furthermore, the amount of the phosphoric acid source added is regulated so that the mass ratio of P with respect to the total of iron (Fe), magnesium (Mg), and the metal element (A) (P/(Fe+Mg+A)) of the crystallized particles is 0.95 or more and 1.03 or less, and preferably 0.96 or more and 1.02 or less.

A raw material solution having the metal source and the phosphoric acid source dissolved therein as coexisting ions is added to a reaction aqueous solution regulated to have a pH of 7 to 10 at a liquid temperature of 25°C, and coprecipitated. The raw material solution shows acidity, and therefore, the raw material solution is added in a dropwise manner while retaining the pH of the reaction aqueous solution within the aforementioned range by adding an alkali thereto in a dropwise manner, and thereby the crystallized particles can be obtained as a coprecipitated matter.

The raw material solution having the metal source and the phosphoric acid source dissolved therein has a uniform composition, and in the dropwise addition thereof to the reaction aqueous solution regulated to have a pH of 7 to 10, preferably 7 to 9, at a liquid temperature of 25°C, the crystallized particles having a uniform composition can be obtained through regulation of the ratio of the metal and phosphoric acid.

In the crystallizing step, the mass ratio of the metal and phosphorus of the crystallized particles becomes substantially the same as the raw material solution. Therefore, the composition of the precursor can be regulated by regulating the composition of the raw material solution. The mass ratio of P with respect to the total of Fe, Mg, and the metal element A (P/(Fe + Mg + A)) may be the same as the composition of the target precursor. The ratio (P/(Fe + Mg + A)) may be 0.95 to 1.03, and may also be 0.96 to 1.02, and within the range, the metal element and the phosphoric acid radical remaining in the reaction aqueous solution can be reduced, and the composition of the resulting precursor can be stabilized.

The metal source used may be a water soluble salt, which is preferably a sulfate, of a divalent or trivalent metal. Examples of the metal source used include iron sulfate, magnesium sulfate, zinc sulfate, cobalt sulfate, nickel sulfate, titanium sulfate, and vanadium sulfate. A hydroxide soluble in an acid can also be used.

Only one kind of the metal source may be used alone, or two or more kinds thereof may be mixed and used, and only one kind thereof is preferably used.

It suffices that the phosphoric acid source is water soluble, and a phosphoric acid compound can be used, in which orthophosphoric acid ($H_3PO_4$), ammonium dihydrogen phosphate ($NH_4H_2PO_4$), diammonium hydrogen phosphate (($NH_4)_2HPO_4$), and the like, which are less likely to be contaminated with impurities, can be preferably used.

Only one kind of the phosphoric acid source may be used alone, or two or more kinds thereof may be mixed and used, and only one kind thereof is preferably used.

In the preparation of the raw material solution, an oxidizing agent, such as a hydrogen peroxide ($H_2O_2$) aqueous solution, may be added to the reaction aqueous solution for regulating the valence number of the metal source in the raw material solution. The amount of the oxidizing agent added is not particularly limited, and may be in a range of 0.3 time to 3.0 times the amount of the metal source.

Only one kind of the oxidizing agent may be used alone, or two or more kinds thereof may be mixed and used.

For regulating the pH of the reaction aqueous solution, one or more kinds selected from the group consisting of sodium hydroxide and lithium hydroxide may be used as an alkali source.

Only one kind of the alkali source may be used alone, or two or more kinds thereof may be mixed and used.

In addition to the alkali source, a complexing agent may be added to the reaction aqueous solution. The complexing agent is not particularly limited, and may be a material capable of forming a complex with an iron ion or other metal ions in the aqueous solution, and examples thereof include an ammonium ion donor.

Only one kind of the complexing agent may be used alone, or two or more kinds thereof may be mixed and used.

The ammonium ion donor is not particularly limited, and examples thereof used include ammonia, ammonium sulfate, ammonium chloride, ammonium carbonate, and ammonium fluoride. The ammonium ion concentration in the reaction aqueous solution may be in a range of 3 g/L to 25 g/L.

Only one kind of the ammonium ion donor may be used alone, or two or more kinds thereof may be mixed and used.

It is also possible that the alkali source and the complexing agent are mixed and added as a buffer solution to the reaction aqueous solution.

In the crystallizing step, a Mg source is added to the reaction aqueous solution. In this manner, magnesium phosphate ($Mg_3(PO_4)_2$) particles can be allowed to exist on the surface of the primary particles of the resulting crystallized particles, the grain boundary among the primary particles, or both the surface and the grain boundary. As a result, the Mg source added not only can be dissolved in the crystallized particles, but also can be allowed to exist on one or both of the surface and the grain boundary of the primary particles, and the compositional ratio can be accurately regulated.

The Mg source in the form of an aqueous solution may be separately added to the reaction aqueous solution, or may be added to the raw material solution. In this case, the Mg source used may be magnesium sulfate, magnesium hydroxide, or the like. In the case where the phosphoric acid source or the metal source contains Mg as an impurity, Mg contained in the phosphoric acid source or the metal source may be utilized. Accordingly, the addition method of the Mg source is not limited, and the prescribed amount, for example, z in the composition showing the amount of Mg added to the target LFP satisfying $0 < z < 0.1$, can be achieved.

Only one kind of the Mg source may be used alone, or two or more kinds thereof may be mixed and used.

[Water Rinsing Step]

In the water rinsing step, the crystallized particles obtained in the crystallizing step are rinsed with water, and dried, so as to provide a precursor of the positive electrode active substance.

In the following description, the precursor of the positive electrode active substance may be referred simply to as a "precursor".

It suffices that the water rinsing can reduce the impurities, and the water rinsing can be performed by an ordinary method. For example, the crystallized particles can be rinsed with water in such a manner that the crystallized particles are mixed with any of pure water, distilled water, and ion exchanged water, which are free of impurity contamination, followed by agitating, and then solid-liquid separation is performed.

The drying is also not particularly limited, and from the standpoint of preventing oxidation of the crystallized particles, the crystallized particles can be dried in a non-oxidizing atmosphere, such as a vacuum atmosphere or an inert gas atmosphere.

The compositional ratio of the metal element and phosphoric acid of the precursor obtained through the water rinsing step is inherited in the composition of the target positive electrode active substance, and therefore the mixing ratio of the metal source and the phosphoric acid source used in the crystallizing step can be determined to achieve the target composition. Specifically, for example, it is preferred that iron (Fe), magnesium (Mg), the metal element A (A), and phosphoric acid ($PO_4$) are contained in a mass ratio of $Fe/Mg/A/PO_4 = y/z/1 - y - z/1 + \beta$, in which y satisfies $0.2 < y < 1.0$, z satisfies $0 < z < 0.1$ and $0.2 < y + z \leq 1.0$, and the metal element A is at least one kind of an additive element selected from the group consisting of Zn, Co, Ni, Ti, and V. $\beta$ preferably satisfies $-0.05 \leq \beta \leq 0.03$, and more preferably $-0.04 \leq \beta \leq 0.02$.

The precursor may also be expressed, for example, by the general formula $Fe_yMg_zA_{1-y-z}(PO_4)_{1+\beta}$. The general formula herein shows the composition of the entire precursor including the magnesium phosphate ($Mg_3(PO_4)_2$) particles existing on the surface, the grain boundary, or the both thereof of the primary particles of the crystallized particles. Accordingly, Mg may exist in the form of the magnesium phosphate ($Mg_3(PO_4)_2$) particles on the surface of the primary particles of the precursor, the grain boundary of the primary particles, or both the surface and the grain boundary, and a part thereof may be dissolved in the precursor. In the formula, y, z, $\beta$, and the element M have been described, and the descriptions thereof are omitted herein.

The precursor may have a specific surface area of 7.0 $m^2$/g or more and 12.0 $m^2$/g or less. In this case, the reactivity of the lithium source and the precursor in baking can be enhanced, and the excessive sintering of the primary particles of the LFP can be further suppressed. The specific surface area of the precursor is preferably 8.8 $m^2$/g or more and 11.5 $m^2$/g or less, and more preferably 9.5 $m^2$/g or more and 11.0 $m^2$/g or less.

The precursor may have a particle diameter (D50) at a cumulative percentage of 50% in the cumulative particle size distribution of 0.5 $\mu$m or more and 5.0 $\mu$m or less. In this case, the packing density of the resulting positive electrode material in the form of a battery can be enhanced, and the contact with the electrolyte can be secured to further enhance the input and output characteristics. The D50 of the precursor is preferably 1.9 $\mu$m or more and 5.0 $\mu$m or less, and more preferably 2.5 $\mu$m or more and 4.5 $\mu$m or less.

The specific surface area and the D50 of the precursor can be controlled with the crystallization condition, and the precursor having a specific surface area and D50 within the aforementioned ranges can be obtained by regulating the pH, the agitation condition, and the like.

(Mixing Step)

In the mixing step, the precursor of the positive electrode active substance obtained through the water rinsing step, a lithium source, and a carbon source are mixed, so as to provide a raw material mixture. A phosphorus source may also be mixed depending on necessity.

It is preferred that the precursor and the lithium source are mixed in such a manner that the mass ratio x (Li/Me) of lithium (Li) and the metal (Me) other than lithium in the resulting LFP is more than 0.9 and less than 1.1, and more preferably 0.95 or more and 1.05 or less. In the case where the mass ratio (P/(Fe + Mg + A)) of the metal and phosphorus of the precursor is less than 1, it is preferred that a phosphorus source is mixed in such a manner that the ratio of the metal and phosphorus is 0.99 or more and 1.03 or less. In the case where the ratio (P/(Fe + Mg + A)) of the positive electrode material is 0.99 or more, the metal element that is not dissolved in the crystals of the olivine structure can be suppressed from eluting through the charge and discharge reaction, and the durability and the safety of the lithium ion secondary battery can be further enhanced. Therefore, the ratio (P/(Fe + Mg + A)) in the mixing step is preferably 0.99 or more and 1.03 or less.

The ratio x is substantially not changed before and after the baking step described later, and therefore the ratio x of the raw material mixture to be subjected to the baking step is substantially identical to the ratio Li/Me of the resulting LFP. Accordingly, in the mixing step, the materials are preferably mixed in such a manner that the resulting LFP has the target ratio x.

The ratio x may be decreased slightly due to evaporation of lithium in the baking step or the like. Accordingly, the ratio x in the mixing step is preferably larger than the ratio x of the target LFP by the decrement of the ratio x. The decrement of the ratio x becomes substantially constant depending on the baking condition, and therefore can be easily obtained by a preliminary test or the like.

The lithium source is not particularly limited, and may be lithium carbonate, lithium hydroxide, lithium sulfate, or the like, in which lithium carbonate and lithium hydroxide, which are free of impurity contamination, can be preferably used.

Only one kind of the lithium source may be used alone, or two or more kinds thereof may be mixed and used, and only one kind thereof is preferably used.

Examples of the carbon source include graphite, such as natural graphite and artificial graphite, a carbon black material, such as acetylene black and Ketjen Black, carbon fibers, and an organic compound forming a carbonaceous material through decomposition, such as sucrose and ascorbic acid, and only one kind thereof may be used alone, or two or more kinds thereof may be used.

Only one kind of the carbon source may be used alone, or two or more kinds thereof may be mixed and used.

The amount of the carbon source mixed is not particularly limited, as long as being an amount that the LFP is coated with the conductive carbonaceous film, and may be mixed with the LFP in an amount of 1 to 5% by mass in terms of carbon amount.

The phosphorus source is not particularly limited, and may be ammonium dihydrogen phosphate ($NH_4H_2PO_4$), diammonium hydrogen phosphate (($NH_4)_2HPO_4$), or the like.

Only one kind of the phosphorus source may be used alone, or two or more kinds thereof may be mixed and used.

The mixing means in mixing the precursor and the lithium compound in the mixing step may be an ordinary mixer, and for example, a shaker mixer, a Loedige mixer, a Julia mixer, a V-blender, or the like may be used.

(Baking Step)

In the baking step, the raw material mixture obtained through the mixing step is baked in a non-oxidizing atmosphere, so as to provide the positive electrode material containing the positive electrode active substance.

In the baking step, the baking temperature in baking the raw material mixture, i.e., the maximum temperature set to the baking furnace, is not particularly limited, and for example, is preferably 600°C to 850°C, and more preferably 600°C to 750°C.

In the case where the baking temperature is 600°C or more, the diffusion of lithium in the precursor can be sufficiently achieved to make the crystal structure of the resulting LFP particularly uniform, and the use thereof as a positive electrode active substance can sufficiently enhance the battery characteristics. Furthermore, the reaction of the lithium source and the precursor can be sufficiently performed, and thereby the excessive lithium remaining and the unreacted precursor particles remaining can be further suppressed.

In the present production method, the magnesium phosphate particles exist on one or both of the surface and the grain boundary of the primary particles of the precursor. In baking, the magnesium phosphate particles are diffused along with Li in the lithium source into the precursor, so as to form the LFP having an olivine structure in which a part of iron is replaced by magnesium, and the mismatch factor is relaxed as described above. In the present production method, the phosphoric acid compound described above is used as the precursor, and mixed with the lithium source in such a state that the fine magnesium phosphate particles exist on one or both of the surface and the grain boundary of the primary particles of the precursor, and then baked. Therefore, it is considered that as compared to a production method of mixing and baking an iron source, a magnesium source, and the like with a phosphoric acid source and a lithium source in the form of individual materials, magnesium and the additive element are diffused more uniformly in the crystals of the LFP, resulting in a large effect of relaxing the mismatch factor.

The retention time at the baking temperature is not particularly limited, and may be an ordinary condition in baking the LFP, for example, 0.5 hour to 12 hours, and preferably 2 hours to 6 hours.

The atmosphere in baking is not particularly limited, as long as being a non-oxidizing atmosphere, and for example, an inert atmosphere, such as nitrogen, or a reducing atmosphere may be used.

The atmosphere in baking therein is the atmosphere except for the gas formed through the reaction in baking, and for example, may be an atmospheric gas supplied to the baking furnace.

In the baking step, calcination may be performed at a calcination temperature lower than the baking temperature. The calcination temperature may be, for example, 350°C to 550°C, and preferably 400°C to 500°C.

The retention time at the calcination temperature may be, for example, 0.5 hour to 12 hours, and preferably 2 hours to 6 hours.

After the calcination, the baking may be performed after cooling once, or the baking step may be performed continuously by increasing the temperature from the calcination temperature to the baking temperature.

The atmosphere in the calcination is not particularly limited, and may be, for example, the same atmosphere as the baking step.

The baking furnace is not particularly limited, and for example, a furnace capable of baking the raw material mixture in an inert atmosphere or a reducing atmosphere can be used. An electric furnace generating no gas is preferably used from the standpoint of retaining the atmosphere in the furnace uniform, and any of a batch type and continuous type furnaces can be used. Any of a furnace baking the raw material mixture housed in a baking vessel and a furnace baking the raw material mixture fluidized can be used. From the standpoint of enhancing the productivity, a continuous baking furnace is preferably used in the baking step.

(Cracking Step)

The powder of positive electrode material obtained through the baking step may undergo aggregation or light sintering in some cases. In these cases, the present production method may optionally include a cracking step of cracking the powder after the baking step.

The cracking herein means an operation in which mechanical energy is applied to an aggregate of multiple secondary particles formed through sintering necking among the secondary particles or the like in baking, and thereby the secondary particles are separated from each other with substantially no breakage of the secondary particles, so as to unravel the aggregate. The cracking step is preferably performed by selecting the condition of cracking in such a manner that the positive electrode material after cracking has an average particle diameter, a particle size distribution, and the like within the desired ranges. After cracking, sieving and the like may be performed depending on necessity.

(Composition of Positive Electrode Material)

The composition of the positive electrode material produced by the present production method described above is not particularly limited. The positive electrode material may be a positive electrode material containing the positive electrode active substance including aggregated particles including aggregated multiple primary particles coated with the carbonaceous film, in which

the composition of the LFP contained in the positive electrode active substance may contain lithium (Li), iron (Fe), magnesium (Mg), and the metal element A (A) in a mass ratio of Li/Fe/Mg/A = x/y/z/1 - y - z. As for x, y, and z, it is preferred that x satisfies $0.9 < x < 1.1$, y satisfies $0.2 < y < 1.0$, z satisfies $0 < z < 0.1$ and $0.2 < y + z \leq 1.0$. The metal element A may be at least one kind of an additive element selected from the group consisting of Zn, Co, Ni, Ti, and V. x may satisfy $0.95 \leq x \leq 1.05$.

Phosphoric acid ($PO_4$) may be contained in a ratio of $1+\alpha$ in the mass ratio above, in which it is preferred that $\alpha$ satisfies $-0.05 \leq \alpha \leq 0.03$, and preferably $-0.01 \leq \alpha \leq 0.03$.

The positive electrode active substance may also be expressed by, for example, the general formula $Li_x Fe_y Mg_z A_{1-y-z}(PO_4)_{1+\alpha}$. In the formula, x, y, $\alpha$, and the element A have been described, and the descriptions thereof are omitted herein.

The present production method described above can provide a positive electrode material containing lithium iron phosphate that has high input and output characteristics in using as a positive electrode of a lithium ion secondary battery.

[Positive Electrode for Lithium Ion Secondary Battery]

The positive electrode for a lithium ion secondary battery of the present embodiment is a positive electrode for a lithium ion secondary battery, including an aluminum collector and a positive electrode mixture layer formed on the aluminum collector, in which

the positive electrode mixture layer contains the positive electrode material for a lithium ion secondary battery of the present embodiment described above.

The positive electrode is a member in the form of a sheet, and is formed, for example, by coating a positive electrode mixture paste containing the positive electrode material described above as a positive electrode active substance on a surface of a collector formed of an aluminum foil (i.e., an aluminum collector), followed by drying.

The positive electrode is appropriately treated corresponding to the battery using the same. For example, a cutting treatment forming into the appropriate size corresponding to the target secondary battery, a pressure compressing treatment by roll press or the like for enhancing the electrode density, and the like are performed.

The positive electrode mixture paste is formed by adding a solvent to the positive electrode mixture, followed by kneading. The positive electrode mixture is formed by mixing the positive electrode material described above in the form of powder, the conductive material, and a binder.

The conductive material is added for imparting appropriate conductivity to the electrode. The conductive material is not particularly limited, and examples thereof used include graphite (such as natural graphite, artificial graphite, and expanded graphite) and a carbon black based material, such as acetylene black and Ketjen Black (registered trade name).

Only one kind of the conductive material may be used alone, or two or more kinds thereof may be mixed and used.

The binder serves a function of binding the positive electrode active substance particles. The binder used in the positive electrode mixture is not particularly limited, and examples thereof used include polyvinylidene fluoride (PVDF), polytetrafluoroethylene (PTFE), fluorine rubber, ethylene-propylene-diene rubber, styrene-butadiene, a cellulose based resin, and polyacrylic acid.

Only one kind of the binder may be used alone, or two or more kinds thereof may be mixed and used.

The positive electrode mixture may contain activated carbon and the like added thereto. The addition of activated carbon and the like can increase the electric double layer capacity of the positive electrode.

The solvent is for dissolving the binder and dispersing the positive electrode active substance, the conductive material, activated carbon, and the like in the binder. The solvent is not particularly limited, and examples thereof used include an organic solvent, such as N-methyl-2-pyrrolidone.

Only one kind of the solvent may be used alone, or two or more kinds thereof may be mixed and used.

The mixing ratio of the substances in the positive electrode mixture paste is not particularly limited. For example, assuming that the solid content of the positive electrode mixture except for the solvent is 100 parts by mass, the content of the positive electrode active substance may be 60 parts by mass to 98 parts by mass, the content of the conductive material may be 1 part by mass to 20 parts by mass, and the content of the binder may be 1 part by mass to 20 parts by mass, as similar to the positive electrode of an ordinary lithium ion secondary battery.

[Lithium Ion Secondary Battery]

In the lithium ion secondary battery of the present embodiment, the positive electrode may contain the positive electrode material of the present embodiment. One configuration example of the battery of the present embodiment will be described below for each of the constitutional elements.

The battery of the present embodiment has a structure that is substantially the same as an ordinary lithium ion secondary battery, except that the positive electrode material obtained through the method for producing a positive electrode material for a lithium ion secondary battery described above is used as the positive electrode material of the positive electrode, more specifically as the positive electrode active substance.

Specifically, the battery of the present embodiment has a structure including a case, and a positive electrode, a negative electrode, a non-aqueous electrolyte, and a separator depending on necessity, housed in the case. More specifically, in the case where a non-aqueous electrolytic solution is used, the secondary battery of the present embodiment is produced in such a manner that a positive electrode and a negative electrode are laminated via a separator to form an electrode assembly, the resulting electrode assembly is impregnated with the non-aqueous electrolytic solution, a collecting lead wire or the like is connected each between the positive electrode collector of the positive electrode and a positive electrode terminal connected to the exterior and between the negative electrode collector of the negative electrode and a negative electrode terminal connected to the exterior, and the components are sealed in a case.

The structure of the secondary battery of the present embodiment is not limited to the example described above. The external shape thereof may be various shapes, such as a cylindrical type and a laminated type. The positive electrode has been described above, and the description thereof is omitted herein.

(Negative Electrode)

The negative electrode is a member in the form of a sheet formed by coating a negative electrode mixture paste on the surface of a metal foil collector, such as copper, followed by drying. The negative electrode is formed in substantially the same method as the positive electrode although the components constituting the negative electrode mixture paste and the formulation thereof, the material of the collector, and the like are different, and may be subjected to various treatments depending on necessity as similar to the positive electrode.

The negative electrode mixture paste is a paste formed by adding an appropriate solvent to the negative electrode mixture obtained by mixing a negative electrode active substance and a binder.

The negative electrode active substance used may be a substance containing lithium, such as metallic lithium or a lithium alloy, or an occlusion substance capable of occluding and discharging lithium ion.

The occlusion substance is not particularly limited, and examples thereof used include natural graphite, artificial graphite, a powder material of an organic compound baked material, such as a phenol resin, and a carbonaceous substance, such as coke. In the case where the occlusion substance is used as the negative electrode active substance, a fluorine-containing resin, such as PVDF, can be used as a binder, and an organic solvent, such as N-methyl-2-pyrrolidone, can be used as a solvent for dispersing the negative electrode active substance in the binder.

(Separator)

The separator is disposed and held between the positive electrode and the negative electrode in the case where a non-aqueous electrolytic solution is used, and has a function of separating the positive electrode and the negative electrode and retaining the electrolyte. Examples of the separator used include a thin film of polyethylene or polypropylene having many fine pores, but are not particularly limited, as long as having the aforementioned function.

(Non-aqueous Electrolyte)

Examples of the non-aqueous electrolyte used include a non-aqueous electrolytic solution.

Examples of the non-aqueous electrolytic solution include a solution obtained by dissolving a lithium salt as a supporting salt in an organic solvent. The non-aqueous electrolytic solution may also be a solution obtained by dissolving a lithium salt in an ionic liquid. The ionic liquid is a salt that is in a liquid form at ordinary temperature (25°C) constituting a cation other than lithium ion and an anion.

Examples of the organic solvent used include a cyclic carbonate, such as ethylene carbonate, propylene carbonate, butylene carbonate, and trifluoropropylene carbonate; a linear carbonate, such as diethyl carbonate, dimethyl carbonate, ethyl methyl carbonate, and dipropyl carbonate; an ether compound, such as tetrahydrofuran, 2-methyltetrahydrofuran, and dimethoxyethane; a sulfur compound, such as ethyl methyl sulfone and butane sultone; and a phosphorus compound, such as triethyl phosphate and trioctyl phosphate.

Only one kind of the organic solvent selected from the aforementioned compound group may be used alone, or two or more kinds thereof may be mixed and used.

Examples of the supporting salt used include $LiPF_6$, $LiBF_4$, $LiClO_4$, $LiAsF_6$, $LiN(CF_3SO_2)_2$, and a complex salt thereof. The non-aqueous electrolytic solution may further contain a radical scavenger, a surfactant, a flame retardant, and the like.

Only one kind of the supporting salt may be used alone, or two or more kinds thereof may be mixed and used.

The non-aqueous electrolyte used may be a solid electrolyte. A solid electrolyte has a capability of withstanding a high voltage. Examples of the solid electrolyte include an inorganic solid electrolyte and an organic solid electrolyte.

Examples of the inorganic solid electrolyte include an oxide based solid electrolyte and a sulfide based solid electrolyte.

The oxide based solid electrolyte is not particularly limited, and for example, a solid electrolyte containing oxygen (O) and having lithium ion conductivity and electron insulating property can be preferably used. Specific examples of the oxide based solid electrolyte include lithium phosphate ($Li_3PO_4$), $Li_3PO_4N_x$, $LiBO_2N_x$, $LiNbO_3$, $LiTaO_3$, $Li_2SiO_3$, $Li_4SiO_4$-$Li_3PO_4$, $Li_4SiO_4$-$Li_3VO_4$, $Li_2O$-$B_2O_3$-$P_2O_5$, $Li_2O$-$SiO_2$, $Li_2O$-$B_2O_3$-$ZnO$, $Li_{1+X}Al_XTi_{2-X}(PO_4)_3$ ($0 \leq X \leq 1$), $Li_{1+X-}Al_XGe_{2-X}(PO_4)_3$ ($0 \leq X \leq 1$), $LiTi_2(PO_4)_3$, $Li_{3X}La_{2/3-X}TiO_3$ ($0 \leq X \leq 2/3$), $Li_5La_3Ta_2O_{12}$, $Li_7La_3Zr_2O_{12}$, $Li_6BaLa_2Ta_2O_{12}$, and $Li_{3.6}Si_{0.6}P_{0.4}O_4$. One or more kinds of the oxide based solid electrolyte selected from the aforementioned materials may be used.

The sulfide based solid electrolyte is not particularly limited, and for example, a solid electrolyte containing sulfur (S) and having lithium ion conductivity and electron insulating property can be preferably used. Specific examples of the sulfide based solid electrolyte include $Li_2S$-$P_2S_5$, $Li_2S$-$SiS_2$, $LiI$-$Li_2S$-$SiS_2$, $LiI$-$Li_2S$-$P_2S_5$, $LiI$-$Li_2S$-$B_2S_3$, $Li_3PO_4$-$Li_2S$-$Si_2S$, $Li_3PO_4$-$Li_2S$-$SiS_2$, $LiPO_4$-$Li_2S$-$SiS$, $LiI$-$Li_2S$-$P_2O_5$, and $LiI$-$Li_3PO_4$-$P_2S_5$. One or more kinds of the sulfide based solid electrolyte selected from the aforementioned materials may be used.

The inorganic solid electrolyte used may be a material other than the above, and examples thereof used include $Li_3N$, $LiI$, and $Li_3N$-$LiI$-$LiOH$.

The organic solid electrolyte is not particularly limited, as long as being a polymer compound showing ionic conductivity, and examples thereof used include polyethylene oxide, polypropylene oxide, and a copolymer thereof. The organic solid electrolyte may contain a supporting salt (lithium salt).

Only one kind of the organic solid electrolyte may be used alone, or two or more kinds thereof may be used.

(Shape and Configuration of Secondary Battery)

As described above, the battery of the present embodiment can be in various shapes, such as a cylindrical type and a laminated type. In any shape used, in the case where the secondary battery of the present embodiment uses a non-aqueous electrolytic solution as the non-aqueous electrolyte, it is possible that the positive electrode and the negative electrode are laminated via the separator to form an electrode assembly. The resulting electrode assembly is impregnated with the non-aqueous electrolytic solution, a collecting lead wire or the like is connected each between the positive electrode collector and a positive electrode terminal connected to the exterior and between the negative electrode collector and a negative electrode terminal connected to the exterior, and the components are housed in a battery case to provide a sealed structure.

The battery according to the present embodiment is not limited to an embodiment using a non-aqueous electrolytic solution as a non-aqueous electrolyte, and for example, may be a secondary battery using a solid non-aqueous electrolyte, i.e., an all-solid-state battery. In the case where an all-solid-state battery is produced, the configuration other than the positive electrode material may be appropriately changed depending on necessity.

As described above, the battery according to the present embodiment uses the positive electrode material according to the present embodiment as a material of the positive electrode, and thereby is excellent in the battery capacity and the input and output characteristics. Consequently, the battery according to the present embodiment can be favorably used as a rechargeable battery for a mobile information terminal, such as a mobile phone, a smartphone, a tablet computer, and a notebook computer, a mobile music player, a digital camera, a clinical instrument, and a clean energy vehicle, such as a hybrid electric vehicle (HEV), an electric vehicle (EV), and a plug-in hybrid electric vehicle (PHEV).

Examples

The present embodiment will be described more specifically with reference to examples below. However, the present embodiment is not limited to the examples below.

1. Evaluation Methods

In Examples and Comparative Examples below, the evaluation was performed in the following methods.

(1) Analysis of Composition

The compositions of the precursor of the positive electrode active substance and the positive electrode material were measured by the ICP emission spectroscopy.

(2) Lattice Area and Lattice Volume of b-c Plane of Positive Electrode Material

The mixture layer of the active substance was released off from the positive electrode for the lithium ion secondary battery (evaluation battery) produced by the method described later, and measured with an X-ray diffraction apparatus to provide a diffraction pattern of the mixture layer, from which the crystal lattice constant before charging and the lattice volume were calculated.

After full charging the evaluation battery produced by the method described later at a constant current of 0.1 C with an upper limit voltage of 3.7 V at room temperature (25°C), the evaluation battery was broken down, and the positive electrode was extracted. The extracted positive electrode was sufficiently washed with diethyl carbonate (DEC), dried at room temperature under reduced pressure for 12 hours, and then further dried in vacuum at 50°C for 12 hours. The mixture layer of the active substance was released off from the dried positive electrode, and measured with an X-ray diffraction apparatus to provide a diffraction pattern of the mixture layer, from which the crystal lattice constants after charging were obtained, and the lattice area and the lattice volume were calculated.

(3) Crystallite Diameter of Positive Electrode Material

The diffraction pattern was measured with an X-ray diffraction apparatus under the following measurement condition.

Radiation source: Cu-K$\alpha$
Step size: 0.01°/step
Scanning rate: 3 sec/step

In the measured diffraction pattern, the full width at half maximum (B) of the peak within a range of $2\theta$ of 28.8 to 30.8° was used, and the crystallite diameter was calculated according to the following expressions (i) and (ii).

$$\text{Crystallite diameter (nm)} = \{0.9 \times 1.5418 \times 0.1\}/\{\beta \times \cos((29.78/2) \times \pi/2)\} \,...\, \text{(i)}$$

$$\beta = (B - b) \,...\, \text{(ii)}$$

In the expressions, B represents the full width at half maximum of the peak within a range of $2\theta$ of 28.8 to 30.8° in the diffraction pattern measured for the positive electrode active substance particles, and b represents the full width at half maximum of the standard specimen Si ($2\theta = 47.3°$).

(4) Specific Surface Area

The specific surface areas of the precursor and the positive electrode material were measured by the one-point BET method by nitrogen gas adsorption.

(5) Average Particle Diameter of Precursor

The particle diameter (D50) at a cumulative percentage of 50% in the volume-based cumulative particle size distribution was obtained with a laser diffraction-scattering particle size distribution measuring apparatus.

(6) Tap Density

The tap density of the positive electrode material was measured after shaking the specimen container housing the positive electrode material 500 times with a tapping machine (KRS-409, available from Kuramochi Scientific Instruments Co., Ltd.).

(7) NMP Absorption Amount of Positive Electrode Material

The NMP absorption amount was measured according to JIS K6217-4:2017 using NMP.

(8) Powder Compact Density of Positive Electrode Material

3 g of the specimen was placed in a mold having an inner diameter of 20 mm, and the surface of the specimen was flattened by vibrating the mold several times. An operation of applying a preliminary load of 10 kN to the mold and releasing the load was repeated three times, and then a load of 16 kN was further applied to the mold. The volumes of the specimen were calculated from the heights of the specimen under applying the load and under releasing the load not applied with the load, and the compression densities under application of pressure and without application of pressure were obtained.

(9) Production of Battery for Evaluation and Evaluation of Battery Characteristics

A laminate type secondary battery 10 (see Fig. 1) was produced as a lithium ion secondary battery for evaluation, and the battery characteristics (i.e., the load characteristics, the direct current resistance, and the cycle characteristics) were evaluated. The production method of the laminate type secondary battery 10 and the evaluation method of the battery characteristics are as follows.

(Production of Positive Electrode)

The positive electrode material, polyvinylidene fluoride (PVdF) as a binder, and acetylene black (AB) as a conductive auxiliary agent were mixed at a mass ratio of positive electrode material/PVdF/AB = 90/5/5 to provide a mixture. N-methyl-2-pyrrolidone (NMP) as a solvent was added to the mixture for imparting fluidity to provide a slurry.

The slurry was then coated on an aluminum (Al) foil having a thickness of 30 $\mu$m (collector), and dried in vacuum at 120°C for 12 hours. Thereafter, the collector was cut into a strip having a coated width of 35 mm, and repeatedly compressed twice with a roll pressing machine at a roll gap of 5 $\mu$m, a roll feed speed of 0.5 m/min, so as to produce a positive electrode 11 for Examples and Comparative Examples.

(Production of Lithium Ion Secondary Battery)

As shown in Fig. 1, a laminate type secondary battery (evaluation battery) 10 has a structure in which a laminate of a positive electrode 11, a separator 12, and a negative electrode 13 impregnated with an electrolytic solution is sealed with a laminate film (aluminum laminate film) 14. A positive electrode tab 15 is connected to the positive electrode 11, a negative electrode tab 16 is connected to the negative electrode 13, and the positive electrode tab 15 and the negative electrode tab 16 each are exposed outside the laminate film 14.

A negative electrode mixture paste, which was a mixture of natural graphite powder having an average particle diameter of approximately 20 $\mu$m and polyvinylidene fluoride, was coated on a copper foil to provide a negative electrode 13. The resulting positive electrode 11 and negative electrode 13 were cut into a prescribed size, and the positive electrode tab 15 and the negative electrode tab 16 were welded to the positive electrode 11 and the negative electrode 13, respectively. The positive electrode 11 and the negative electrode 13 were disposed via a separator 12 formed of a porous polypropylene film in the laminate film 14.

In a globe box with an Ar gas atmosphere regulated to have a dew point of -80°C, ethylene carbonate (EC) and diethyl carbonate (DEC) were mixed in a ratio of EC/DEC = 50/50 (% by volume) to provide a mixed solution. LiPF$_6$ was added and dissolved in the mixed solution to provide a concentration of 1 mol/dm$^3$, to which 2% by mass of vinylene carbonate (VC) was further added to provide an electrolytic solution. The resulting electrolytic solution was charged in the laminate film 14, which was then sealed to provide the laminate type secondary battery 10.

(Evaluation of Lithium Ion Secondary Battery)

The resulting laminate type secondary battery 10 was evaluated in the following manner.

(Load Characteristics (Discharge Capacity Ratio))

A charge and discharge test of the laminate type secondary battery was performed in the following manner. The battery was charged and discharged repeatedly three times at a cutoff voltage of 2.5 V to 3.7 V and a constant current of 0.1 C at room temperature (25°C). The lithium ion secondary battery was then charged and discharged at a cutoff voltage of 2.5 V to 3.7 V and a constant current of 0.1 C at an environmental temperature of 0°C, and the discharge capacity was measured. The battery was further charged at 0.1 C and discharged at 3 C at a cutoff voltage of 2.5 V to 3.7 V at an environmental temperature of 0°C, and the discharge capacity was measured.

The ratio of the discharge capacity at 3 C and the discharge capacity at 0.1 C thus measured was designated as the load characteristics calculated according to the following expression (A).

$$\text{Load characteristics (\%)} = (3 \text{ C discharge capacity}/0.1 \text{ C discharge capacity}) \times 100 \dots \text{(A)}$$

(Direct Current Resistance (DCR))

At room temperature (25°C), the laminate type battery 10 regulated to have a state of charge (SOC) of 50% at a charge rate of 0.1 C was alternately charged and discharged each for 10 seconds at rates of 1 C, 3 C, 5 C, and 10 C at an environmental temperature of 0°C, and the current values and the voltage values after 10 seconds of each rate were plotted on the abscissa and the ordinate respectively, in which the gradient of the approximate line by the least square method was designated as the input DCR in charging and the output DCR in discharging. A break period of 10 minutes was provided in each of the time of changing the energizing direction at each current and the time of changing the energizing current .

(Cycle Characteristics (Capacity Retention Rate)

The battery was charged and discharged repeatedly 300 times at a cutoff voltage of 2.5 V to 3.7 V and under a constant current of a charge and discharge rate of 1 C at an environmental temperature of 60°C, and the ratio of the 300th discharge capacity and the first discharge capacity was calculated as the cycle characteristics according to the following expression (B).

$$\text{Cycle characteristics (\%)} = (300\text{th discharge capacity/first discharge capacity}) \times 100 \dots \text{(B)}$$

[Example 1]

(Production of Precursor of Positive Electrode Active Substance)

279 g of $FeSO_4 \cdot 7H_2O$ as a Fe source was dissolved in pure water. 130 g of $H_3PO_4$ (75% by mass aqueous solution) as a P source and 3.08 g of $Mg(OH)_2$ were added and dissolved therein. 170 g of $H_2O_2$ (30% w/v aqueous solution) as an oxidizing agent and pure water for controlling the concentration were added to the mixed aqueous solution to provide a raw material solution. Sodium hydroxide (30% by mass aqueous solution) and aqueous ammonia (28% by mass aqueous solution) were mixed at a molar ratio of 1/1 to provide a buffer solution.

Pure water was placed in a reaction vessel equipped with an agitator and a pH sensor, to which the buffer solution and the raw material solution each were added under agitation in such a manner that the pH at 25°C of the reaction aqueous solution in the reaction vessel was in a range of 8.0 to 8.5. After adding the entire amount of the prepared raw material solution, the agitation was continued for 30 minutes to complete the progress of the reaction.

After completing the reaction, the reaction aqueous solution was filtered, and rinsed and dehydrated with distilled water multiple times to provide crystallized particles in a cake form. The crystallized particles were dried in vacuum at 50°C for 24 hours to provide precursor ($FePO_4$) of the positive electrode active substance.

The observation of the resulting precursor with a scanning electron microscope confirmed that the precursor was constituted by secondary particles formed through aggregation of primary particles of $FePO_4$, and fine $Mg_3(PO_4)_2$ particles of 10 nm to 300 nm existed on the particle surface of the primary particles.

The mass ratio of P with respect to the total of Fe, Mg, and the metal element A (P/(Fe + Mg + A)) was 0.98. The specific surface area was 9.7 $m^2/g$, and the D50 was 2.3 $\mu m$. The evaluation results of the resulting precursor are shown in Table 1.

(Production and Evaluation of Positive Electrode Material)

The resulting precursor and lithium hydroxide (LiOH) as a Li source were mixed to make a mass ratio of Li with respect to the total of the metal elements other than Li of Li/(Fe + Mg) = 1.02. Ammonium dihydrogen phosphate ($NH_4H_2PO_4$) was further mixed with the mixed powder of the precursor and the Li source to make a mass ratio of P with respect to the total of Fe, Mg, and the metal element A (P/(Fe + Mg + A)) of 1.00. Sucrose powder in an amount of 2.5% by mass in terms of carbon amount with respect to the positive electrode active substance to be synthesized was further mixed therein to provide a raw material mixture.

The resulting raw material mixture was then heat-treated in a nitrogen atmosphere at 700°C for 5 hours, so as to perform the synthesis of the positive electrode active substance and the support of carbon on the particle surface of the positive electrode active substance, thereby producing a positive electrode material for a lithium ion secondary battery of Example 1.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material had a mass ratio of Li/Fe/Mg/$PO_4$ = 1.02/0.95/0.05/1. The evaluation results of the resulting positive electrode material and the lithium ion secondary battery using the positive electrode material are shown in Table 2.

[Example 2]

A positive electrode material for a lithium ion secondary battery of Example 2 was produced and evaluated in the same manner as in Example 1 except that in the production of the precursor of the positive electrode active substance, 6.12 g of $Mg(OH)_2$ and 129 g of $H_3PO_4$ (75% aqueous solution) were mixed.

The observation of the resulting precursor with a scanning electron microscope confirmed that the precursor was constituted by secondary particles formed through aggregation of primary particles of $FePO_4$, and fine $Mg_3(PO_4)_2$ particles of 10 nm to 300 nm existed on the particle surface of the primary particles.

The mass ratio of P with respect to the total of Fe, Mg, and the metal element A (P/(Fe + Mg + A)) was 0.96. The specific surface area was 10.6 $m^2$/g, and the D50 was 4.1 $\mu$m. The evaluation results of the resulting precursor are shown in Table 1.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material had a mass ratio of Li/Fe/Mg/$PO_4$ = 1.02/0.905/0.095/1. The evaluation results of the resulting precursor are shown in Table 1, and the evaluation results of the resulting positive electrode material and the lithium ion secondary battery using the positive electrode material are shown in Table 2.

[Example 3]

A positive electrode material for a lithium ion secondary battery of Example 3 was produced and evaluated in the same manner as in Example 1 except that in the production of the precursor of the positive electrode active substance, 1.19 g of $Mg(OH)_2$ was mixed.

The observation of the resulting precursor with a scanning electron microscope confirmed that the precursor was constituted by secondary particles formed through aggregation of primary particles of $FePO_4$, and fine $Mg_3(PO_4)_2$ particles of 10 nm to 300 nm existed on the particle surface of the primary particles.

The mass ratio of P with respect to the total of Fe, Mg, and the metal element A (P/(Fe + Mg + A)) was 0.99. The specific surface area was 8.4 $m^2$/g, and the D50 was 1.2 $\mu$m. The evaluation results of the resulting precursor are shown in Table 1.

The X-ray diffraction analysis of the resulting positive electrode material confirmed that the LFP was formed as a positive electrode active substance. The observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material had a mass ratio of Li/Fe/Mg/$PO_4$ = 1.02/0.98/0.02/1. The evaluation results of the resulting positive electrode material and the lithium ion secondary battery using the positive electrode material are shown in Table 2.

[Example 4]

A positive electrode material for a lithium ion secondary battery of Example 4 was produced and evaluated in the same manner as in Example 1 except that the precursor of the positive electrode material and lithium hydroxide (LiOH) as a Li source were mixed to make a mass ratio of Li with respect to Fe and Mg of Li/(Fe + Mg) = 1.00.

The X-ray diffraction analysis of the resulting positive electrode material confirmed that the LFP was formed as a positive electrode active substance. The observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material had a mass ratio of $Li/Fe/Mg+PO_4 = 1/0.95/0.05/1$. The evaluation results of the resulting precursor are shown in Table 1, and the evaluation results of the resulting positive electrode material and the lithium ion secondary battery using the positive electrode material are shown in Table 2.

[Example 5]

A positive electrode material for a lithium ion secondary battery of Example 5 was produced and evaluated in the same manner as in Example 1 except that the precursor of the positive electrode material and lithium hydroxide (LiOH) as a Li source were mixed to make a mass ratio of Li with respect to Fe and Mg of Li/(Fe + Mg) = 0.98.

The X-ray diffraction analysis of the resulting positive electrode material confirmed that the LFP was formed as a positive electrode active substance. The observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material had a mass ratio of $Li/Fe/Mg+PO_4 = 0.98/0.95/0.05/1$. The evaluation results of the resulting precursor are shown in Table 1, and the evaluation results of the resulting positive electrode material and the lithium ion secondary battery using the positive electrode material are shown in Table 1.

[Comparative Example 1]

A positive electrode material for a lithium ion secondary battery of Comparative Example 1 was produced and evaluated in the same manner as in Example 1 except that in the production of the precursor of the positive electrode active substance, $Mg(OH)_2$ was not mixed, but 131 g of $H_3PO_4$ (75% by mass aqueous solution) was mixed, and ammonium dihydrogen phosphate was not mixed in mixing the precursor and the Li source.

The observation of the resulting precursor with a scanning electron microscope confirmed that the precursor was constituted by secondary particles formed through aggregation of primary particles of $FePO_4$.

The mass ratio of P with respect to the total of Fe, Mg, and the metal element A (P/(Fe + Mg + A)) was 1.04. The specific surface area was 10.4 $m^2/g$, and the D50 was 1.8 $\mu m$. The evaluation results of the resulting precursor are shown in Table 1.

The X-ray diffraction analysis of the resulting positive electrode material confirmed that the LFP was formed as a positive electrode active substance. The observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material had a mass ratio of $Li/Fe/PO_4 = 1.02/1/1.04$. The evaluation results of the resulting precursor are shown in Table 1, and the evaluation results of the resulting positive electrode material and the lithium ion secondary battery using the positive electrode material are shown in Table 2.

[Comparative Example 2]

A positive electrode material for a lithium ion secondary battery of Comparative Example 2 was produced and evaluated in the same manner as in Example 1 except that in the production of the precursor of the positive electrode active substance, 8.36 g of $Mg(OH)_2$ and 128 g of $H_3PO_4$ (75% by mass aqueous solution) were mixed.

The observation of the resulting precursor with a scanning electron microscope confirmed that the precursor was constituted by secondary particles formed through aggregation of primary particles of $FePO_4$, and fine $Mg_3(PO_4)_2$ particles of 10 nm to 300 nm existed on the particle surface of the primary particles.

The mass ratio of P with respect to the total of Fe, Mg, and the metal element A (P/(Fe + Mg + A)) was 0.94. The specific surface area was 8.7 $m^2/g$, and the D50 was 2.7 $\mu m$. The evaluation results of the resulting precursor are shown in Table 1.

The X-ray diffraction analysis of the resulting positive electrode material confirmed that the LFP was formed as a positive electrode active substance. The observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material had a mass ratio of Li/Fe/Mg+PO$_4$ = 1.02/0.875/0.125/1. The evaluation results of the resulting precursor are shown in Table 1, and the evaluation results of the resulting positive electrode material and the lithium ion secondary battery using the positive electrode material are shown in Table 2.

[Table 1]

Table 1

|  | Precursor | | | |
|---|---|---|---|---|
|  | P/(Fe + Mg + A) (molar ratio) | Fe/Mg (molar ratio) | **Specific** surface area (m$^2$/g) | D50 (μm) |
| Example 1 | 0.98 | 95/5 | 9.7 | 2.3 |
| Example 2 | 0.96 | 90.5/9.5 | 10.6 | 4.1 |
| Example 3 | 0.99 | 98/2 | 8.4 | 1.2 |
| Example 4 | 0.98 | 95/5 | 9.7 | 2.3 |
| Example 5 | 0.98 | 95/5 | 9.7 | 2.3 |
| Comparative Example 1 | 1.04 | 100/0 | 10.4 | 1.8 |
| Comparative Example 2 | 0.94 | 87.5/12.5 | 8.7 | 2.7 |

[Table 2]

Table 2

|  | Positive electrode material | | | | | | |
|---|---|---|---|---|---|---|---|
|  | Change rate of area of b-c axis plane (%) | Change rate of lattice volume (%) | Crystallite diameter (nm) | Specific surface area (m$^2$/g) | Tap density (g/cm$^3$) | NMP absorption amount (mL/100 g) | Powder compact density (g/cm$^3$) |
| Example 1 | 1.24 | 5.43 | 119 | 8.4 | 1.2 | 32 | 2.4 |
| Example 2 | 1.16 | 5.08 | 112 | 10.6 | 1.2 | 34 | 2.5 |
| Example 3 | 1.30 | 6.02 | 132 | 7.1 | 1.3 | 28 | 2.4 |
| Example 4 | 1.21 | 5.39 | 115 | 8.6 | 1.2 | 33 | 2.4 |
| Example 5 | 1.18 | 5.31 | 118 | 8.2 | 1.2 | 32 | 2.4 |
| Comparative Example 1 | 1.34 | 6.08 | 135 | 6.4 | 1.2 | 26 | 2.4 |
| Comparative Example 2 | 1.09 | 4.88 | 108 | 11.2 | 1.2 | 25 | 2.4 |

Table 2 (continued)

| | Lithium ion secondary battery | | | |
| --- | --- | --- | --- | --- |
| | Load characteristics (%) | Input DCR ($\Omega$) | Output DCR ($\Omega$) | Cycle characteristics (%) |
| Example 1 | 87 | 5.5 | 4.8 | 87 |
| Example 2 | 90 | 5.1 | 4.3 | 90 |
| Example 3 | 86 | 5.7 | 5.1 | 85 |
| Example 4 | 88 | 5.4 | 4.6 | 88 |
| Example 5 | 89 | 5.2 | 4.5 | 88 |
| Comparative Example 1 | 80 | 6.6 | 6.1 | 81 |
| Comparative Example 2 | 77 | 7.5 | 6.9 | 80 |

As shown in Table 1, it is confirmed that Examples 1 to 5 are superior in the load characteristics, the direct current resistance, and the cycle characteristics to Comparative Examples 1 and 2. In Comparative Example 1, it is considered that due to the absence of Mg replacing, the lattice strain and the volume change caused by the intercalation and deintercalation reaction of Li ions are large, and the load characteristics and the input and output characteristics are deteriorated. In Comparative Example 2, it is considered that due to the too large amount of Mg replacing, the reaction resistances are increased, and the load characteristics and the input and output characteristics are deteriorated.

As described above, it is conformed that the positive electrode material and the production method of the present embodiment can provide a positive electrode material containing lithium iron phosphate that has high input and output characteristics and cycle characteristics in using as a positive electrode of a lithium ion secondary battery.

Reference Signs List

10: Laminate type secondary battery
11: Positive electrode
12: Separator
13: Negative electrode
14: Laminate film
15: Positive electrode tab
16: Negative electrode tab

**Claims**

1. A positive electrode material for a lithium ion secondary battery, comprising aggregated particles comprising aggregated multiple primary particles of a positive electrode active substance coated with a carbonaceous film,

   wherein the positive electrode active substance comprises lithium iron phosphate, the lithium iron phosphate comprises lithium (Li), iron (Fe), magnesium (Mg), and a metal element A (A) in a mass ratio of Li/Fe/Mg/A = x/y/z/1 - y - z, in which x satisfies $0.9 < x < 1.1$, y satisfies $0.2 < y < 1.0$, z satisfies $0 < z < 0.1$ and $0.2 < y + z \leq 1$, and the metal element A is at least one kind of an additive element selected from the group consisting of Zn, Co, Ni, Ti, and V, and

   wherein the positive electrode material has a change rate of a lattice area of a b-c axis plane before charging and after full charging (((lattice area before charging - lattice area after full charging)/lattice area before charging) $\times$ 100) of 1.10% or more and 1.33% or less.

2. The positive electrode material for a lithium ion secondary battery according to claim 1, wherein the positive electrode material has a change rate of a lattice volume before charging and after full charging (((lattice volume before charging - lattice volume after full charging)/volume before charging) $\times$ 100) of 4.90% or more and 6.06% or less.

3. The positive electrode material for a lithium ion secondary battery according to claim 1 or 2, wherein the positive electrode material has a crystallite diameter of 80 nm or more and 150 nm or less, and a specific surface area of 6.0

m$^2$/g or more and 14.0 m$^2$/g or less.

4. The positive electrode material for a lithium ion secondary battery according to claim 1 or 2, wherein the positive electrode material has a tap density of 1.1 g/cm$^3$ or more, an NMP absorption amount of 40 mL/100 g or less, and a powder compact density obtained by compacting the positive electrode material into a circular shape having a diameter of 20 mm under application of a pressure of 16 kN of 2.4 g/cm$^3$ or more.

5. A method for producing the positive electrode material for a lithium ion secondary battery according to claim 1 or 2, comprising

a crystallizing step of preforming a crystallization reaction with a metal source having a valence number of 2, 3, or both, and a phosphoric acid source, so as to provide crystallized **particles,**
a water rinsing step of water rinsing and drying the crystallized particles, so as to provide a precursor of the positive electrode active substance,
a mixing step of mixing the precursor of the positive electrode active substance, a lithium source, and a carbon source, so as to provide a raw material mixture, and
a baking step of baking the raw material mixture in a non-oxidizing atmosphere, so as to provide the positive electrode material comprising the positive electrode active substance;
wherein the precursor of the positive electrode active substance has a mass ratio of P with respect to a total of Fe, Mg, and the metal element A (P/(Fe + Mg + A)) of 0.95 or more and 1.03 or less.

6. The method for producing the positive electrode material for a lithium ion secondary battery according to claim 5, wherein the precursor of the positive electrode active substance has a specific surface area of 7.0 m$^2$/g or more and 12.0 m$^2$/g or less and a particle diameter (D50) at a cumulative percentage of 50% in a cumulative particle size distribution of 0.5 $\mu$m or more and 5.0 $\mu$m or less.

7. A positive electrode for a lithium ion secondary battery, comprising an aluminum collector and a positive electrode mixture layer formed on the aluminum collector,
wherein the positive electrode mixture layer comprises the positive electrode material for a lithium ion secondary battery according to claim 1 or 2.

8. A lithium ion secondary battery comprising at least a positive electrode, a negative electrode, and an electrolyte, wherein the positive electrode is the positive electrode for a lithium ion secondary battery according to claim 7.

[Fig. 1]

<u>10</u>

## INTERNATIONAL SEARCH REPORT

| | International application No. |
|---|---|
| | **PCT/JP2023/025770** |

**A. CLASSIFICATION OF SUBJECT MATTER**

*H01M 4/58*(2010.01)i; *C01B 25/45*(2006.01)i; *H01M 4/136*(2010.01)i; *H01M 4/36*(2006.01)i; *H01M 4/66*(2006.01)i
FI: H01M4/58; C01B25/45 Z; H01M4/136; H01M4/36 C; H01M4/66 A

According to International Patent Classification (IPC) or to both national classification and IPC

**B. FIELDS SEARCHED**

Minimum documentation searched (classification system followed by classification symbols)

H01M4/58; C01B25/45; H01M4/136; H01M4/36; H01M4/66

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 108448070 A (SICHUAN UNIVERSITY) 24 August 2018 (2018-08-24)<br>claims 3, 6, paragraph [0032], examples 8-10 | 1-8 |
| X | JP 2013-518372 A (PHOSTECH LITHIUM INC) 20 May 2013 (2013-05-20)<br>claim 1, paragraphs [0067]-[0068], table 2 | 1-4, 7-8 |
| A | claim 1, paragraphs [0067]-[0068], table 2 | 5-6 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/025770**

| Patent document cited in search report | | | Publication date (day/month/year) | Patent family member(s) | Publication date (day/month/year) |
|---|---|---|---|---|---|
| CN | 108448070 | A | 24 August 2018 | (Family: none) | |
| JP | 2013-518372 | A | 20 May 2013 | US 2013/0095390 A1 claim 1, paragraphs [0077]-[0078], table of paragraph [0075] WO 2011/091525 A1 EP 2529431 A1 CA 2691265 A KR 10-2013-0002319 A TW 201232899 A | |

Form PCT/ISA/210 (patent family annex) (January 2015)

**EP 4 597 626 A1**

**Patent documents cited in the description**

- JP 2001307726 A